# EUROPÄISCHE PATENTSCHRIFT

(11) **EP 1 267 680 B1**
(45) Veröffentlichungstag und Bekanntmachung des Hinweises auf die Patenterteilung: **09.11.2005**
(21) Anmeldenummer: 01919196.4
(22) Anmeldetag: 13.03.2001
(51) Int. Cl.: A47J 27/08

(54) **DAMPFDRUCK-KOCHTOPF**
STEAM PRESSURE COOKER
AUTOCUISEUR

(30) Priorität: 27.03.2000 DE 10014766
(43) Veröffentlichungstag der Anmeldung: 02.01.2003
(73) Patentinhaber: Niese, Ursula, 67745 Grumbach (DE)
(72) Erfinder: Niese, Ursula, 67745 Grumbach (DE)
(74) Vertreter: Vièl, Christof
(86) Internationale Anmeldenummer: PCT/DE2001/000958
(87) Internationale Veröffentlichungsnummer: WO 2001/072185

(56) Entgegenhaltungen:
- EP-A- 0 491 324
- EP-B- 0 691 097
- DE-A- 3 327 439
- US-A- 6 019 029

## Beschreibung

Die Erfindung betrifft einen Dampfdruck-Kochtopf, im wesentlichen bestehend aus einem Topf mit einem horizontal nach außen abgewinkelten Schüttrand, einem zum Verschließen des Topfes auf diesem aufliegenden Deckel, einer zwischen Topf und Deckel angeordneten gummielastischen Dichtung, mindestens zwei beweglichen, im Umfang etwa gleich verteilten Klammern, die bei geschlossenem Dampfdruck-Kochtopf Deckel und Schüttrand umgreifen und bei geöffnetem Dampfdruck-Kochtopf den Schüttrand freigeben, einer Haube, welche die Klammern und den Deckel abdeckt und einem darauf angeordneten Griff.

Derartige Dampfdruck-Kochtöpfe sind bekannt.

Beispielsweise ist in der EP 0 691 097 B1 eine Vorrichtung zum Steuern des Öffnens und des Schließens von Klemmbacken zum Verriegeln des Deckels auf einem Topf, die radial beweglich an einem Deckel mittels Mitnehmerarmen angebracht sind, welche ihrerseits radial beweglich sind, beschrieben, wobei die Vorrichtung ein Steuerorgan aufweist, das an dem Deckel in einer im wesentlichen radialen Richtung um einen vorbestimmten Weg zwischen einer ersten Stellung, in der sich die Klemmbacken in der Verriegelungsstellung befinden und einer zweiten Stellung beweglich ist, in der sich die Klemmbacken in der entriegelten Stellung befinden. Diese Ausführung ist allerdings technisch sehr aufwendig und somit wartungsanfällig.

In der EP 0 691 096 B1 wird bei einer derartigen Vorrichtung das Verriegeln der Klemmbacken durch einen Ventilstopfen, welcher unter der Wirkung des in dem Behälter wirkenden Druckes eine obere und eine untere Position einnehmen kann, beschrieben.

Die EP 0 139 772 B1 beschreibt einen Dampfdruckkochtopf, dessen Deckeleinheit aus einem Unterdeckel und einem Oberdeckel besteht, wobei letzterer zwei Halbdeckel aufweist, die um eine zur vertikalen geometrischen Topfmittelachse parallelen Drehachse relativ zum Unterdeckel und zum Untertopf drehbar aufgenommen sind und wobei die Drehachsen exzentrisch zur Topfmittelachse und bezüglich dieser diametral in einem mittig am Unterdeckel drehbar gelagerten Drehteil einander gegenüberliegen. Beim Öffnen führen die beiden Halbdeckel entsprechend ihrer exzentrischen Lagerung an dem Drehteil eine halbkreisförmige Bewegung aus, bis die Umbördelungen der Deckeleinheit nicht mehr den Topfrand untergreifen. Auch diese Lösung ist sehr aufwendig.

Aus der EP 0 108 203 B 1 ist ein Dampfdruckkochtopf bekannt, bei dem eine Haube einen Rahmen überlappend untergreift und an einer an der Unterseite des Rahmens gehaltenen Dichtung derart anliegt, dass die relative Position von Haube und Dichtung unter dem Druck im Topfinnern infolge Abdichtung und Reibungswiderstand die Öffnungsbetätigung der Verschlussglieder durch die Haube verhindert und nur bei geringem Restdruck infolge Abhebens der Haube von der Dichtung erlaubt.

In der DE 40 26 166 A1 und der WO 92/03080 ist ein Dampfdruckkochtopf beschrieben, bei dem ein Betätigungsknopf axial beweglich an dem Deckel gelagert ist und bei einer axialen Bewegung des Betätigungsknopfes in Schließrichtung die Verschlußsegmente radial nach innen in Verriegelungsstellung gezogen werden. Hierdurch wird gewährleistet, dass zum Verschließen des Kochgefäßes lediglich von Hand auf den Betätigungsknopf gedrückt zu werden braucht.

Aufgabe der Erfindung ist es somit, einen Dampfdruck-Kochtopf zu schaffen, der bei möglichst einfacher Bauweise einhändig zu öffnen und zu schließen ist und der wartungsfreundlich ist.

Diese Aufgabe wird erfindungsgemäß dadurch gelöst, dass der Griff aus zwei Teilen besteht, wobei das eine Teil mit der Haube und das andere Teil mit dem Deckel verbunden ist und dass zum Öffnen des Dampfdruck-Kochtopfes durch betätigen des Griffes die Haube relativ zum Deckel koaxial verdrehbar ist, wobei die zwischen Deckel und Haube in ihrer horizontalen Ebene geführten Klammem nach außen verschoben werden, bis sie den Schüttrand freigeben und dass ein Kippspannwerk zum Sichern der jeweiligen Endlage vorgesehen ist.

Hierdurch wird eine einfach und einhändig zu bedienende und weitgehend wartungsfreie Mechanik geschaffen, mit der der Dampfdruck-Kochtopf sowohl leicht zu öffnen und zu schließen als auch leicht zu pflegen ist.

Eine Ausbildung der Erfindung besteht darin, dass die Klammern mittels eines Umformelementes verschiebbar sind.

Unter Umformelementen versteht man Funktionselemente, die innerhalb eines Funktionsflusses die Aufgabe haben, die kennzeichnenden Bewegungsgrößen Weg bzw. Drehwinkel. Geschwindigkeit und Beschleunigung hinsichtlich Betrag und Richtung je nach Aufgabenstellung zu ändern. Im vorliegenden Fall wird die im Griff eingeleitete Bewegung durch das Umformelement in eine Bewegung der Klammern umgewandelt.

Es liegt im Rahmen der Erfindung, dass das Umformelement ein Kulissengetriebe ist, wobei auf dem Deckel bzw. unter der Haube angeordnete Triebzapfen jeweils in einem entsprechenden Schlitz der Klammern gleiten.

Diese Ausbildung ist relativ leicht herstellbar und kaum fehleranfällig, wodurch sich ihre Eignung zum Einsatz in einem Dampfdruck-Kochtopf ergibt.

Hierbei ist es zweckmäßig, dass jede Klammer zwei Schlitze aufweist.

Eine Weiterbildung der Erfindung besteht darin, dass das Kippspannwerk zum Festhalten in der geschlossenen bzw. offenen Endlage aus einer vorgespannten Feder und jeweils auf dem Deckel und unter der Haube angeordneten Gelenkzapfen besteht.

Durch dieses Kippspannwerk wird die Haube relativ zum Deckel in der gewünschten Endlage festgehalten. Unter einem Kippspannwerk versteht man ein gefedertes Getriebe, dessen Bewegungsbereich begrenzt wird. In der Kipplage erreicht die Federspannung ein Maximum, das Getriebe befindet sich in labilem Gleichgewicht.

Schließlich besteht eine vorteilhafte Ausbildung der Erfindung darin, dass durch Zusammendrücken des mit der Haube verbundenen und des mit dem Deckel verbundenen Teils des Griffes an je einem Ende des Griffes die Haube relativ zum Deckel koaxial verdrehbar ist.

Dies ermöglicht ein ergonomisches Bedienen des Dampfdruck-Kochtopfes. Sowohl zum Öffnen als auch zum Schließen des Deckels bedarf es lediglich des Zusammendrückens der beiden Teile des Griffes.

Im folgenden wird ein Ausführungsbeispiel der Erfindung anhand von Zeichnungen beschrieben.

Es zeigen
- Fig. 1: eine Draufsicht auf einen geschlossenen Dampfdruck-Kochtopf,
- Fig. 2: einen Vertikalschnitt einen geschlossenen Dampfdruck-Kochtopfes, wobei die Triebzapfen zu Zwecken der besseren Darstellung in die Schnittebene gedreht gezeichnet sind,
- Fig. 3: einen Horizontalschnitt eines geschlossenen Dampfdruck-Kochtopfes entsprechend der Schnittebene aus Fig. 2,
- Fig. 4: eine Draufsicht auf einen geöffneten Dampfdruck-Kochtopf,
- Fig. 5: einen Vertikalschnitt eines offenen Dampfdruck-Kochtopfes, wobei sowohl die Klammern als auch die Triebzapfen zu Zwecken der besseren Darstellung in die Schnittebene gedreht gezeichnet sind,
- Fig. 6: einen Horizontalschnitt eines offenen Dampfdruck-Kochtopfes entsprechend der Schnittebene aus Fig. 5.

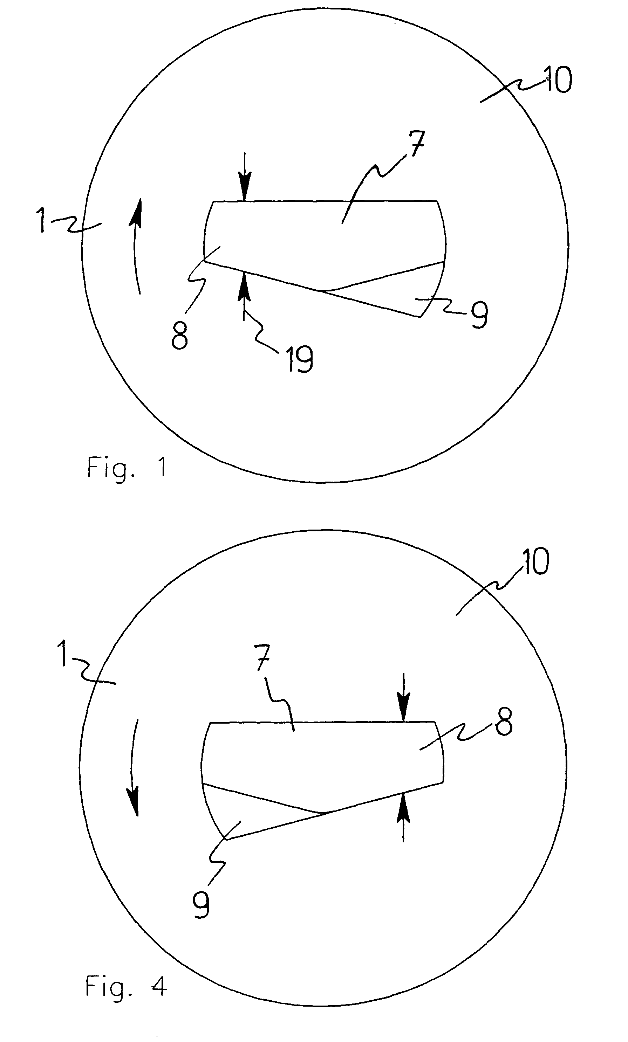

Wie in Fig. 1 und Fig. 4 dargestellt, weist der Deckel 2 des erfindungsgemäßen Dampfdruck-Kochtopfes 1 einen zweiteiligen Griff 7 auf, wobei das eine Griffteil 8 mit dem Deckel 2 und das andere Griffteil 9 mit der Haube 10 verbunden ist.

Das Schließen des Dampfdruck-Kochtopfes 1 drückt der Benutzer das eine Ende des Griffes zusammen (Pfeil 19), zum Öffnen das andere (Pfeil 18).

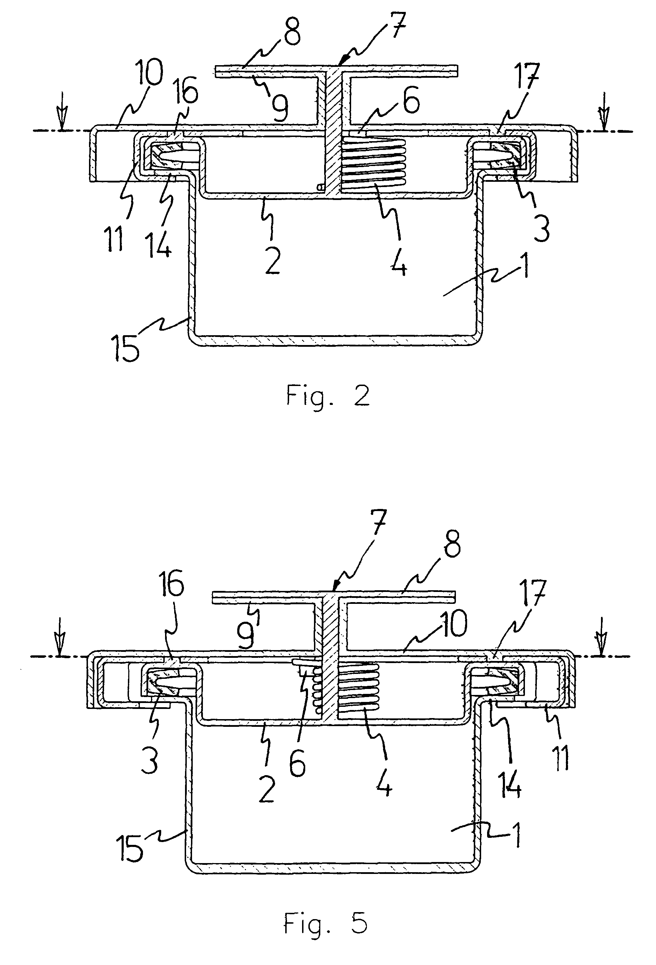

Fig. 2 und Fig. 5 zeigen den Dampfdruck-Kochtopf 1 in geschlossenem und geöffnetem Zustand. Der Dampfdruck-Kochtopf 1 besteht aus einem Topf 15, der einen horizontal nach außen abgewinkelten Schüttrand 14 aufweist. Zum Verschließen des Topfes 15 dient ein Deckel 2, der eine umlaufende Dichtung 3 aufweist, welche bei Auflegen des Deckels 2 auf den Topf 15 auf dem Schüttrand 14 zu liegen kommt.

Zum Verschließen des Deckels 2 dienen oberhalb des Deckels 2 angeordnete Klammern 11, welche im geschlossenem Zustand den Schüttrand 14 umgreifen und ihn im geöffneten Zustand freigeben.

Oberhalb der Klammern 11 wiederum ist eine Haube 10 angeordnet, die die Klammern 11 und den Deckel 2 abdeckt. Auf dieser Haube 10 ist der Griff 7 angeordnet. Von der Mitte des Deckels 2 erstreckt sich das Griffteil 8 des Deckels 2 durch die Haube 10 und das Griffteil 9 der Haube 10 hindurch und der horizontal verlaufende Bereich des Griffteils 8 des Deckels 2 ist oberhalb des horizontal verlaufenden Bereich des Griffteils 9 der Haube 10 angeordnet, so dass Deckel 2 und Haube 10 um die zentrale Symmetrieachse angeordnet sind.

Von dem Deckel 2 nach oben bzw. von der Haube 10 nach unten ragend sind vertikal angeordnete Triebzapfen 16, 17 vorgesehen, die in entsprechende Schlitze 12, 13 der Klammern 11 eingreifen und in dem jeweiligen Schlitz 12, 13 gleiten. Hierdurch ergibt sich eine durch Betätigung des Griffes 7 induzierte Verdrehbarkeit zwischen Haube 10 und Deckel 2, die aufgrund der schräg nach außen verlaufenden Schlitze 12, 13 zu einem Verschieben der Klammern 11 nach außen bzw. innen führt, wobei die Klammern 11 den Schüttrand 14 freigeben bzw. umgreifen. Die Klammern 1 1 werden also durch ein aus den Triebzapfen 16, 17 und den Schlitzen 12, 13 bestehendes Kulissengetriebe, das hier als Umformelement wirkt, verschoben. Jede Klammer 11 weist je einen Schlitz 12, 13 für je einen Triebzapfen 16, 17 des Deckels 2 bzw. der Haube 10 auf.

Zum Öffnen des Dampfdruck-Kochtopfes 1 wird durch den Zugriff 18 die Haube 10 relativ zum Deckel 2 koaxial verdreht, wodurch die zwischen Deckel 2 und Haube 10 in ihrer horizontalen Ebene geführten Klammern 11 mittels des Umformelementes nach außen geschoben werden und so den Schüttrand 14 freigeben. Zum Schließen bewirkt der Zugriff 19, dass die Haube relativ zum Deckel 2 in umgekehrter Richtung verdreht wird, wodurch die Klammern 11 nach innen verschoben werden und so den Schüttrand 14 umgreifen.

Eine vorgespannte Feder 4 und jeweils auf dem Deckel 2 und unter der Haube 10 angeordnete Gelenkzapfen 5, 6 bilden ein Kippspannwerk, so dass die Haube 10 relativ zum Deckel 2 in der gewünschten Endlage festgehalten wird.

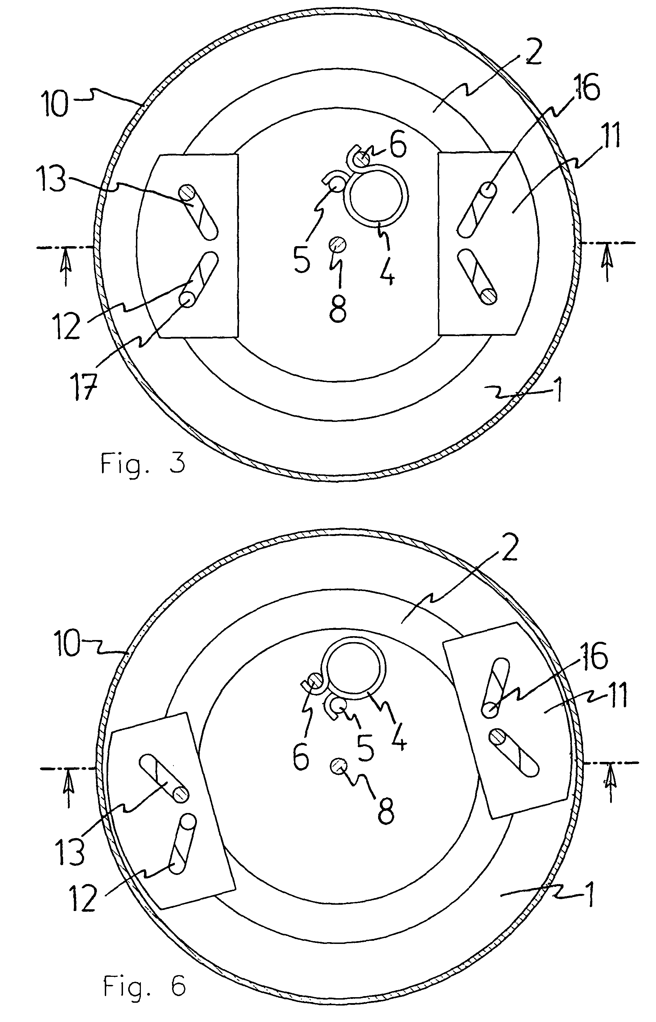

In den Fig. 3 und 6 ist zu erkennen, wie die jeweils zwei Schlitze 12, 13 der Klammern 11 mit den entsprechenden Triebzapfen 16, 17 des Deckels 2 bzw. der Haube 10 zusammenwirken, wenn Deckel 2 und Haube 10 gegeneinander koaxial verdreht werden. Weiterhin ist die Feder 4 mit den dazugehörigen Gelenkzapfen 5, 6 des Deckels 2 bzw. der Haube 10 sichtbar.

## Patentansprüche

1. Dampfdruck-Kochtopf, im wesentlichen bestehend aus einem Topf mit einem horizontal nach außen abgewinkelten Schüttrand, einem zum Verschließen des Topfes auf diesem aufliegenden Deckel, einer zwischen Topf und Deckel angeordneten gummielastischen Dichtung, mindestens zwei beweglichen, im Umfang etwa gleich verteilten Klammern, die bei geschlossenem Dampfdruck-Kochtopf Deckel und Schüttrand umgreifen und bei geöffnetem Dampfdruck-Kochtopf den Schüttrand freigeben, einer Haube, welche die Klammern und den Deckel abdeckt und einem darauf angeordneten Griff, **dadurch gekennzeichnet, dass** der Griff (7) aus zwei Teilen (8, 9) besteht, wobei das eine Teil (9) mit der Haube (10) und das andere Teil (8) mit dem Deckel (2) verbunden ist und dass zum Öffnen des Dampfdruck-Kochtopfes (1) durch Betätigen des Griffes (7) die Haube (10) relativ zum Deckel (2) koaxial verdrehbar ist, wobei die zwischen Deckel (2) und Haube (10) in ihrer horizontalen Ebene geführten Klammern (11) nach außen verschoben werden, bis sie Schüttrand (14) freigeben und dass ein Kippspannwerk (4, 5, 6) zum Sichern der jeweiligen Endlage vorgesehen ist.

2. Dampfdruck-Kochtopf gemäß Anspruch 1, **dadurch gekennzeichnet, dass** die Klammern (11) mittels eines Umformelementes (12, 13, 16, 17) verschiebbar sind.

3. Dampfdruck-Kochtopf gemäß Anspruch 2, **dadurch gekennzeichnet, dass** das Umformelement (12, 13, 16, 17) ein Kulissengetriebe ist, wobei auf dem Deckel (2) bzw. unter der Haube (10) angeordnete Triebzapfen (16, 17) jeweils in einem entsprechenden Schlitz (12, 13) der Klammern (11) gleiten.

4. Dampfdruck-Kochtopf gemäß Anspruch 2, **dadurch gekennzeichnet, dass** jede Klammer (11) zwei Schlitze (12, 13) aufweist.

5. Dampfdruck-Kochtopf gemäß Anspruch 1, **dadurch gekennzeichnet, dass** das Kippspannwerk (4, 5, 6) zum Festhalten in der geschlossenen bzw. offenen Endlage aus einer vorgespannten Feder (4) und jeweils auf dem Deckel (2) und unter der Haube (10) angeordneten Gelenkzapfen (5, 6) besteht.

6. Dampfdruck-Kochtopf gemäß Anspruch 1, **dadurch gekennzeichnet, dass** durch Zusammendrücken des mit der Haube (10) verbundenen und des mit dem Deckel (2) verbundenen Teils (9, 8) des Griffes (7) an je einem Ende des Griffes (7) die Haube (10) relativ zum Deckel (2) koaxial verdrehbar ist.

## Claims

1. Steam pressure cooker, consisting essentially of a pot with a pouring rim bent horizontally outwards, a lid placed upon said pot to close it, an elastomeric seal fitted between the pot and its lid, at least two movable, mutually equidistant peripheral clamps which embrace the lid and the pouring rim when the steam pressure cooker is closed and release the pouring rim when the steam pressure cooker is open, a hood which covers the clamps and the lid and has a grip attached to it, **characterised in that** the grip (7) is made up of two parts (8, 9), the one part (9) being connected with the hood (10) and the other part (8) being connected with the lid (2), and that, to open the steam pressure cooker (1), the hood (10) is coaxially rotatable relative to the lid (2) by actuation of the grip (7), the clamps (11) in the hood's horizontal plane being moved outwards until they release the pouring rim (14), and that a spring/pin arrangement (Kippspannwerk) (4, 5, 6) is provided to secure the respective end position.

2. Steam pressure cooker according to claim 1, **characterised in that** the clamps (11) are movable by means of a conversion element (12, 13, 16, 17).

3. Steam pressure cooker according to claim 2, **characterised in that** the conversion clement (12, 13, 16, 17) is a gate-type gear, with drive pins (16, 17) being located on the lid (2) and under the hood (10) respectively and each sliding in a corresponding slot (12, 13) of the clamps (11).

4. Steam pressure cooker according to claim 2, **characterised in that** each clamp (11) has two slots (12, 13).

5. Steam pressure cooker according to claim 1, **characterised in that** the spring/pin arrangement (Kippspannwerk) (4, 5, 6) for securing the end positions in the closed and open condition consists of a prestressed spring (4) and pivot pins (5, 6) located on the lid (2) and under the hood (10) respectively.

6. Steam pressure cooker according to claim 1, **characterised in that** the hood (10) is coaxially rotatable relative to the lid (2) due to the grip components (9, 8) of the grip (7) being pressed together at one end of the grip (7), said components (9, 8) being connected with the hood (10) and the lid (2) respectively.

## Revendications

1. Autocuiseur, constitué essentiellement d'une casserole ayant un bord de versement replié horizontalement vers l'extérieur, d'un couvercle posé sur la casserole pour la fermer, d'un joint d'étanchéité élastique comme du caoutchouc placé entre la casserole et le couvercle, au moins deux pinces mobiles réparties sur la périphérie de façon sensiblement régulière, lesquelles pinces enserrent le couvercle et le bord de versement lorsque l'autocuiseur est fermé et libèrent le bord de versement lorsque l'autocuiseur est ouvert, d'une calotte qui recouvre le couvercle et les pinces, et d'une poignée placée dessus, **caractérisé en ce que** la poignée (7) se compose de deux pièces (8, 9), l'une des pièce (9) étant reliée à la calotte (10) et l'autre (8) au couvercle (2), **en ce que** pour ouvrir l'autocuiseur (1) en actionnant la poignée (7) la calotte (10) peut être tournée de façon coaxiale au couvercle (2), les pinces (11) qui sont guidées dans leur plan horizontal entre le couvercle (2) et la calotte (10) sont décalées vers l'extérieur jusqu'à ce que le bord de versement (14) soit libéré, et **en ce qu'**un détendeur à ressort basculant (4, 5, 6) est prévu pour bloquer chacune des positions extrêmes.

2. Autocuiseur selon la revendication 1, **caractérisé en ce que** les pinces (11) peuvent être déplacées au moyen d'un élément convertisseur (12, 13, 16, 17).

3. Autocuiseur selon la revendication 2, **caractérisé en ce que** l'élément convertisseur (12, 13, 16, 17) est un organe de commande à coulisse, des coulisseaux d'entraînement (16, 17) disposés sur le couvercle (2) ou sous la calotte (10) glissant chacun dans une fente (12, 13) correspondante des pinces (11).

4. Autocuiseur selon la revendication 2, **caractérisé en ce que** chaque pince (11) est munie de deux fentes (12, 13).

5. Autocuiseur selon la revendication 1, **caractérisé en ce que** le détendeur à ressort basculant (4, 5, 6) pour retenir dans la position extrême fermée ou ouverte est constitué d'un ressort (4) précontraint et de pivots (5, 6) disposés d'une part sur le couvercle (2) et d'autre part sous la calotte (10).

6. Autocuiseur selon la revendication 1, **caractérisé en ce que** en poussant la partie (9) de la poignée (7) reliée à la calotte (10) et celle (8) reliée au couvercle (2) chacune contre une extrémité de la poignée (7), la calotte (10) peut être tournée de façon coaxiale au couvercle (2).
